(19) Europäisches Patentamt / European Patent Office / Office européen des brevets

(11) **EP 4 541 584 B1**

(12) **EUROPEAN PATENT SPECIFICATION**

(45) Date of publication and mention of the grant of the patent:
**18.03.2026 Bulletin 2026/12**

(21) Application number: **23204907.2**

(22) Date of filing: **20.10.2023**

(51) International Patent Classification (IPC):
***B32B 27/08*** *(2006.01)* ***C08L 23/12*** *(2006.01)*
***H01G 4/14*** *(2006.01)*

(52) Cooperative Patent Classification (CPC):
(C-Sets available)
**C08L 23/12; H01G 4/14;** C08L 2203/16; C08L 2203/20; C08L 2205/03; C08L 2205/08; C08L 2207/10 (Cont.)

(54) **COMPATIBILIZED COMPOSITION FOR CAPACITORS COMPRISING PP AND CYCLIC OLEFIN POLYMER**

KOMPATIBILISIERTE ZUSAMMENSETZUNG FÜR KONDENSATOREN MIT PP UND CYCLISCHEM OLEFINPOLYMER

COMPOSITION COMPATIBILISÉE POUR CONDENSATEURS COMPRENANT DU PP ET UN POLYMÈRE D’OLÉFINE CYCLIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**23.04.2025 Bulletin 2025/17**

(73) Proprietors:
- **Borealis GmbH**
  **1020 Vienna (AT)**
- **TOPAS Advanced Polymers GmbH**
  **65479 Raunheim (DE)**

(72) Inventors:
- **Tranchida, Davide**
  **4021 Linz (AT)**
- **Gkourmpis, Thomas**
  **444 32 Stenungsund (SE)**
- **Schaffer, Walter**
  **4021 Linz (AT)**
- **GITSAS, Antonios**
  **4021 Linz (AT)**
- **Jamieson, Scott**
  **4021 Linz (AT)**

(74) Representative: **Ter Meer Steinmeister & Partner Patentanwälte mbB**
**Nymphenburger Straße 4**
**80335 München (DE)**

(56) References cited:
**EP-A1- 4 174 120** **US-A1- 2012 282 476**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 23/0823, C08L 23/0823, C08L 23/142;**
**C08L 23/12, C08L 23/0823, C08L 23/142**

## Description

### Field of the invention

The present invention relates to a composition comprising 70 to 95 wt.-% of a high isotactic homopolymer of propylene, more than 2.5 to less than 30 wt.-% of a cyclic olefin polymer composition, and 0.1 to 2.5 wt.-% of a random propylene copolymer compatibilizer. The present invention is, furthermore, directed to a film comprising the polypropylene composition. Apart from that, a biaxially oriented film comprising the polypropylene composition and a capacitor are provided.

### Technical background

Polypropylene has a relatively high dielectric constant, a low dissipation factor and a good dielectric strength. Due to this, polypropylene has been successfully used as a dielectric in various capacitor film applications. Yet, an issue with the known polypropylene capacitor grades is their limited maximum operating temperature. The new generation of inverters, for example traction inverters for electric mobility and inverters for renewable power such as solar and wind, call for a higher temperature resistance of capacitor films.

The demand for an increased maximum operating temperature or - differently speaking - the demand for a higher durability at a predetermined temperature level, has been addressed in different ways up to now.

CN101724195 A proposes to combine polypropylene with a composite rubber powder at a weight ratio of 100 : 0.01 - 2.0. The composite rubber powder has a particle size of 20 to 100 nm and consists of a silicone rubber powder and a nucleating agent at a weight ratio of 99 : 1 to 90 : 10. It is prepared by mixing silicon rubber latex, obtained via irradiation vulcanization, with an aqueous solution or emulsion of the nucleating agent.

EP 2 995 641 A1 teaches that a high temperature resistance can be accomplished by combining beta-nucleation of polypropylene having high purity with a long chain branched polypropylene. More specifically, it provides a polypropylene composition comprising 95.0 to 99.9 wt.-% of propylene homopolymer with a specific melt flow rate and a very low ash content, 0.1 to 5.0 wt.-% of long chain branched polypropylene and up to 1000 ppm of beta-nucleating agent.

WO 2018/210854 A1 and WO 2018/197034 A1 suggest that it may be preferable to blend polypropylene with certain amounts of specific cyclic olefin copolymers in order to obtain materials that are suitable for high temperature capacitor applications. In this context, WO 2018/210854 A1 relies on ethylene norbornene copolymers with specific norbornene contents, whereas WO 2018/197034 A1 suggests cyclic olefin polymers having a glass transition temperature in a broad range from 120 to 170 °C.

EP 4 174 120 A1 relates to the production of biaxially oriented foils from compositions comprising at least 2 cycloolefin polymers as well as at least one semi-crystalline alpha-olefin polymer. The foils are characterized in that the content of all cycloolefin polymers is in the range from 1 to 25 weight percent relative to the total mass of the foil. Furthermore, all cycloolefin polymers contained in the foil have a glass transition temperature in the range of 120 to 180 °C, and the foil comprises at least a first cycloolefin polymer and a second cycloolefin polymer, wherein the second cycloolefin polymer has a higher glass transition temperature than the first cycloolefin polymer. The content of all semi-crystalline $\alpha$-olefin polymers in the foil ranges from 75 to 99 weight percent relative to the total mass of the foil, and all semi-crystalline $\alpha$-olefin polymers contained in the foil have a melting temperature in the range from 150 to 170 °C. Moreover, it is demanded that the weighted arithmetic mean of the glass transition temperatures of all cycloolefin polymers contained in the foil is less than or equal to the weighted arithmetic mean of the melting temperatures of all semicrystalline alpha-olefin polymers contained in said foil.

Yet, in the above approaches, the increase in the temperature resistance of the capacitor polypropylene compositions has only been achieved at the expense of other crucial properties. Mechanical properties such as low shrinkage and high stiffness as well as the capability to endure high voltages have, for example, been sacrificed to a certain extent.

Thus, there is still a need to provide polypropylene compositions having an improved property set for capacitor applications, *i.e.* a high temperature resistance, a high electrical breakdown strength and suitable mechanical properties. Accordingly, it is an objective of the present invention to overcome the disadvantages of the known compositions and to provide an improved polypropylene composition. Another objective of the present invention is the provision of a polypropylene film having superior performance in capacitor applications. Last but not least, the present invention aims at providing a capacitor with improved specifications. Furthermore, capacitor films also need to have a high temperature resistance and good mechanical properties.

### Summary of the Invention

The above objectives are solved by the polypropylene composition with the features of independent claim 1, the

film with the features of claim 10, the biaxially oriented film with the features of claim 13 and the capacitor with the features of claim 14. Further advantageous embodiments are defined in the dependent claims.

The polypropylene composition according to the present invention comprises 70 to 95 wt.-%, preferably 74.75 to 90 wt.-%, based on the total weight of the polypropylene composition of a high isotactic homopolymer (A) of propylene, more than 2.5 to less than 30 wt.-%, preferably 5 to 25 wt.-% based on the total weight of the polypropylene composition of a cyclic olefin polymer composition (B), and 0.1 to 2.5 wt.-%, preferably 0.25 to 2 wt.-% based on the total weight of the polypropylene composition of a random propylene copolymer compatibilizer (C). The contents of components (A) to (C) preferably add up to 100 wt.-%.

In an embodiment, the polypropylene composition has a weight ratio (C)/(B) of the random propylene copolymer compatibilizer (C) to the cyclic olefin polymer composition (B) in a range of from 0.01 to 0.2, preferably of from 0.01 to 0.1, more preferably of from 0.02 to 0.075, even more preferably from 0.02 to 0.05. When the weight ratio (C)/(B) is within this range, excellent morphological properties can be obtained. In particular, a high degree of dispersion may be achieved when the weight ratio (C)/(B) is within the aforementioned ranges.

Adding a cyclic olefin polymer composition (B) to a high isotactic homopolymer (A) of propylene is technically advantageous because the cyclic olefin polymer composition (B) partially compensates for the increase of electrical conductivity with temperature which is inherent to the high isotactic homopolymer (A) of propylene. Moreover, the combination of a cyclic olefin polymer composition (B) and a high isotactic homopolymer (A) of propylene results in favorable mechanical properties and, thus, facilitates the processing of the composition into films for capacitor applications.

In a preferred embodiment, the polypropylene composition according to the invention is obtained by melt-blending the high isotactic homopolymer (A) of propylene, the cyclic olefin polymer composition (B) and the random propylene copolymer compatibilizer (C). A device, in which melt-blending can be carried out, may be selected from the group consisting of kneaders, mills and extruders. Further, the cyclic olefin polymer composition (B) may, itself be obtained by melt-blending at least two different cyclic olefin polymers.

In contrast to dry-blending approaches, the melt-blending approach allows producing the polypropylene composition with high homogeneity. By selecting the content of the cyclic olefin polymer composition (B) to be more than 2.5 to less than 30 wt.-% and the content of the random propylene copolymer compatibilizer (C) to be 0.1 to 2.5 wt.-%, or by selecting the weight ratio (C)/(B) to be in a range of from 0.01 to 0.2, the cyclic olefin polymer composition (B) is finely and uniformly dispersed in a matrix of the high isotactic homopolymer (A) of propylene. Generally, the dispersion state of the cyclic olefin polymer composition is believed to have an influence on the mechanical and electrical properties of the propylene composition. In other words, if the domains of the cyclic olefin polymer composition (B) are small, the electrical conductivity of the composition tends to be lowered at high temperatures. The dimensions and the shape of the domains which are formed by the cyclic olefin polymer composition (B) in the composition can be analyzed with an atomic force microscope (AFM) or another type of microscope.

Component (A)

The expression "homopolymer (A) of propylene" as used in the present invention relates to a polypropylene that consists substantially, *i.e.* of at least 99.5 wt.-%, more preferably of at least 99.8 wt.-%, of propylene units. Preferably, only propylene units are detectable in the propylene homopolymer via $^{13}C$ NMR spectroscopy, as described in the example section below.

The high isotactic homopolymer (A) of propylene preferably is a linear polypropylene, *i.e.* a polypropylene that does not have a detectable amount of long-chain or short-chain branches.

In a preferred embodiment of the present invention, the high isotactic homopolymer (A) of propylene is characterized by a rather high pentad isotacticity <mmmm>, measured by $^{13}C$ NMR. More specifically, the high isotactic homopolymer (A) of propylene may have an isotactic pentad fraction of from 93 to 99.5 %, preferably 95 to 99.0 %, more preferably from 96 to 98.5 %. In particular embodiments, the pentad isotacticity of the high isotactic homopolymer (A) of propylene is in the range of 96.0 to 98.5 %, still more preferably in the range of 97.0 to 98.0 %.

The high isotacticity preferably goes along with a high crystallinity of the material. Moreover, the high isotacticity is preferably accompanied by a low xylene cold soluble (XCS) content. Therefore, in a further preferred embodiment of the present invention, the high isotactic homopolymer (A) of propylene of the present invention is featured by a rather low XCS content, *i.e.* by a XCS content of equal or below 2.0 wt.-%, more preferably of equal or below 1.8 wt.-%, yet more preferably equal or below 1.6 wt.-%. Thus it is in particular appreciated that the high isotactic homopolymer (A) of propylene of the present invention has a XCS content in the range of 0.3 to equal or below 2.0 wt.-%, more preferably in the range of 0.3 to equal or below 1.8 wt.-%, yet more preferably in the range of 0.4 to equal or below 1.6 wt.-%.

Preferably, the XCS content refers to the XCS content as determined at 25 °C according to ISO 16152. It is further appreciated that the XCS content indicates that the high isotactic homopolymer (A) of propylene is preferably free of any elastomeric polymer component, like an ethylene propylene rubber. In other words, the high isotactic homopolymer (A) of

propylene does not correspond to a heterophasic polypropylene, *i.e.* a system consisting of a polypropylene matrix in which an elastomeric phase is dispersed. Such systems are usually featured by a rather high xylene cold soluble content.

Alternatively or in addition, it is preferred that the high isotactic homopolymer (A) of propylene of the present invention has a melt flow rate given in a specific range. For example, the high isotactic homopolymer of propylene may have a $MFR_2$ (230 °C), measured according to ISO 1133, of from 0.4 to 10 g/10 min, preferably of from 0.5 to 5 g/10 min. In a particularly preferred embodiment, the high isotactic homopolymer (A) of propylene has a $MFR_2$ (230 °C), measured according to ISO 1133, of from 2.0 to 4.5 g/10 min. In this context, it is acknowledged that $MFR_2$ (230 °C) denotes a melt flow rate measured under a load of 2.16 kg at 230 °C.

Furthermore, the high isotactic homopolymer (A) of propylene preferably has an ash content of 60 ppm or less, more preferably 30 ppm or less, even more preferably 20 ppm or less. Preferably, the ash content may be in a range from 5 to 30 ppm, in particular in a range from 10 to 20 ppm. A low ash content is crucial for the dielectric properties, such as the dielectric strength and the dielectric loss. The ash content may be measured according to ISO 3451-1 (1997).

The high isotactic homopolymer (A) of propylene may have a melting temperature, Tm, measured according to ISO 11357, in a range of from 150 to 170 °C, preferably 160 to 170 °C. The crystallization temperature, Tc, of the high isotactic homopolymer (A) of propylene as measured according to ISO 11357 may be in a range of from 110 to 130 °C, preferably of from 110 to 120 °C.

The high isotactic homopolymer (A) of propylene may also comprise one or more additives. Preferably the one or more additives are present in a content from 0 to 2.0 wt.-%, more preferably in an amount from 0.05 to 1.0 wt.-%, in particular in an amount from 0.05 to 0.5 wt.-%, based on the weight of the high isotactic homopolymer (A) of propylene.

The one or more additives may be non-polymeric additives and/or polymeric additives, with non-polymeric additives being preferred. For example, the one or more additives may be selected from the group consisting of antioxidants, stabilizers, acid scavengers, nucleating agents, colorants, plasticizers, slip agents, antiscratch agents, dispersing agents, processing aids, lubricants, pigments, antistatic agent, and the like. It is particularly preferred when the one or more additives are selected from the group consisting of antioxidants, stabilizers and acid scavengers and combinations thereof.

The antioxidants and stabilizers may be selected from the group of hindered phenols and more preferably from the group of hindered phenols not containing phosphorous or sulphur.

The antioxidants and stabilizers are especially preferably one or more compounds selected from the group consisting of 1,3,5-trimethyl-2,4,6-tris(3,5-di-tert-butyl-4-hydroxybenzyl)benzene (sold under trade names Irganox 1330, Anox 330, Ethanox 330 and Kinox-30), pentaerythritol tetrakis(3-(3,5-di-tert-butyl-4-hydroxyphenyl)propionate) (sold under trade names Irganox 1010, Anox 20, Ethanox 310TF and Kinox-10), octadecyl 3-(3',5'-di-tert-butyl-4-hydroxyphenyl)propionate (sold under trade names Irganox 1076, Anox PP 18 and Kinox-16), butylhydroxytoluene (sold under trade names Ionol CP and Vulkanox BHT), 1,3,5-tris(3',5'-di-tert-butyl-4'-hydroxybenzyl)-isocyanurate (sold under trade names Irganox 3114, Anox IC-14, Ethanox 314 and Kinox-34), and 3,4-dihydro-2,5,7,8-tetramethyl-2-(4,8,12-trimethyltridecyl)-2H-1-benzopyran-6-ol (sold under trade names Irganox E 210 and alpha-tocopherol).

The antioxidants and stabilizers are preferably present in a total amount of from 500 to 8000 ppm, based on the total weight of the high isotactic homopolymer (A) of propylene. More preferably, antioxidants and stabilizers are present in a total amount of from 800 to 7000 ppm, still more preferably of from 1000 to 6000 ppm, and in particular from 1500 to 6000 ppm, based on the total weight of the high isotactic homopolymer (A) of propylene. In view of the desired application of the composition in the capacitor field, the antioxidants and stabilizers preferably do not contain phosphorous containing secondary antioxidants, such as tris(2,4-ditert-butylphenyl)phosphite.

Without wishing to be bound by theory, the latter compounds are believed to increase the dissipation in the final capacitor.

Acid scavengers may be salts of organic acids, such as stearates. They typically serve to neutralize acids in a polymer. Examples of such compounds are calcium stearate, zinc stearate and zinc oxide. Acid scavengers are preferably used in an amount of from 20 ppm to 2000 ppm, more preferably from 50 ppm to 1000 ppm, most preferably from 60 to 600 ppm, based on the total weight of the high isotactic homopolymer of propylene (A).

Thus, the one or more additives may, for example, be selected from the group consisting of pentaerythritol tetrakis(3-(3,5-di-tert-butyl-4-hydroxyphenyl)propionate) (sold under trade names Irganox 1010 Anox 20, Ethanox 310TF and Kinox-10), butylhydroxytoluene (sold under trade names Ionol CP and Vulkanox BHT), calcium stearate and combinations thereof.

Component (B)

The cyclic olefin polymer composition (B) preferably is a thermoplastic composition.

The cyclic olefin polymer composition (B) may comprise or may essentially consist of one type of cyclic olefin polymer or of a blend of at least two different types of cyclic olefin polymers.

It is appreciated that the term "cyclic olefin polymer" refers to a polymer comprising a cyclic olefin unit. The cyclic

olefin polymer may be a cyclic olefin homopolymer or a cyclic olefin copolymer.

Within the present invention the term "copolymer" refers to polymers prepared from at least two different monomers. In other words, the term "copolymer" also covers terpolymers and copolymers with four or more different monomeric units. Thus, a cyclic olefin polymer may be a copolymer comprising a first monomeric unit, which is a cyclic olefin unit, and at least one second monomeric unit, which is different from the first monomeric unit, such as a non-cyclic olefin unit. Cyclic olefin copolymers comprising at least a first cyclic olefin unit and a second cyclic olefin unit, which is different from the first cyclic olefin unit, are equally covered by the term "cyclic olefin polymer".

The cyclic olefin copolymer may be a random cyclic olefin copolymer or a cyclic olefin block copolymer (CBC). A cyclic olefin block copolymer may be obtained from styrene and conjugated diene, e.g. butadiene, via anionic polymerization and with an optional subsequent hydrogenation step. Hence, in a preferred embodiment, the cyclic olefin block copolymer may be a fully hydrogenated styrene-butadiene block copolymer. Such a cyclic olefin block copolymer is, for example, commercially available as ViviOn™ from USI Corporation. Use of a cyclic olefin block copolymer may be advantageous from the viewpoint of facilitating the further processing. It may, for instance be expected that stretching ratios of only 2.0 to 4.0 times in MD and TD direction are sufficient to produce an oriented film from a polypropylene composition comprising one or more cyclic olefin block copolymer as the cyclic olefin polymer composition (B).

The cyclic olefin polymer may either be obtained by ring-opening or ring-sustaining polymerization of at least one cyclic olefin monomer. Among these alternatives, a cyclic olefin polymer obtained by ring-sustaining polymerization is preferred.

In a further preferred embodiment, the at least one cyclic olefin monomer is selected from the group consisting of cyclopentadiene, tetracyclododecene, norbornene, styrene and derivatives of the aforementioned compounds. Norbornene and its derivatives are particularly preferred examples for the at least one cyclic olefin monomer.

Norbornene and its derivatives are preferably compounds according to formula (I),

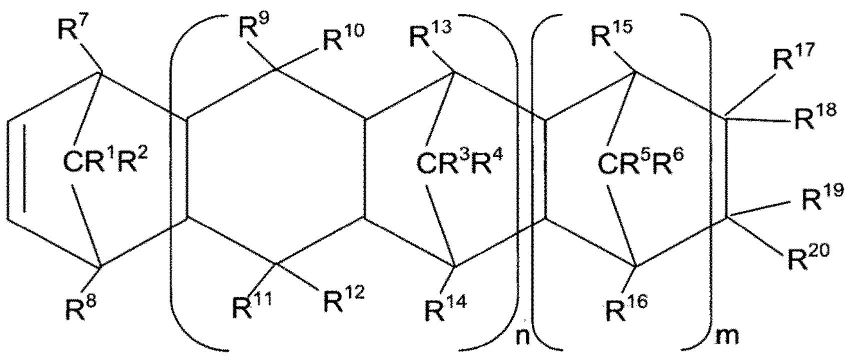

(I),

wherein n is 0 or 1,

m is 0 or an integer, in particular 0 or 1,

$R^1$, $R^2$, $R^3$, $R^4$, $R^5$, $R^6$ are independently selected from the group consisting of hydrogen, halogen, an alkyl group, a cycloalkyl group, an aryl group and an alkoxy group,

$R^7$, $R^8$, $R^9$, $R^{10}$, $R^{11}$, $R^{12}$, $R^{13}$, $R^{14}$, $R^{15}$, $R^{16}$ are independently selected from the group consisting of hydrogen and an alkyl group,

$R^{17}$, $R^{18}$, $R^{19}$, $R^{20}$ are independently selected from the group consisting of hydrogen, halogen, an alkyl group, a cycloalkyl group and an aryl group wherein $R^{17}$ and $R^{19}$ may alternatively form a cyclic ring or a cyclic system, wherein the cyclic ring or cyclic system may be saturated or unsaturated.

Further and equally preferred examples of norbornene derivatives are the compounds according to formula (II),

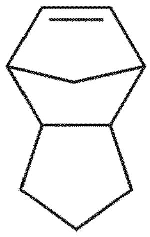 , 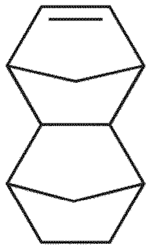 , 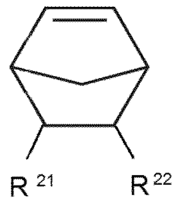 , 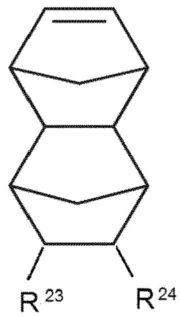 (II)

wherein $R^{21}$ and $R^{22}$ are independently selected from the group consisting of hydrogen, a $C_5$-$C_7$ cycloalkyl group, $C_5$-$C_7$ aryl group and a $C_1$-$C_4$ alkyl group and wherein $R^{23}$ and $R^{24}$ are independently selected from the group consisting of hydrogen and a $C_1$-$C_4$ alkyl group.

The non-cyclic olefin monomer can be an alpha-olefin and/or a conjugated diene. Non-limiting examples of alpha-olefins are $C_2$-$C_8$ alpha-olefins, such as alpha-olefins selected from the group consisting of ethylene, propylene, 1-butene, 2-methyl-1-propene (isobutylene) and 3-methyl-1-butene. Preferred alpha-olefins are linear $C_2$-$C_8$ alpha-olefins, such as ethylene and propylene. Particularly preferred is ethylene as alpha-olefin. A particularly preferred conjugated diene is butadiene.

In one embodiment, the cyclic olefin polymer composition (B) comprises at least one cyclic olefin copolymer selected from the group of norbornene-ethylene copolymers and tetracyclododecene-ethylene copolymers or a blend of at least two of said cyclic olefin copolymers. In a particularly preferred embodiment, the cyclic olefin polymer composition (B) comprises or essentially consists of one norbornene-ethylene copolymer or a blend of two norbornene-ethylene copolymers with different norbornene contents. Further, non-limiting examples of cyclic olefin polymers are polymers commercially available as APEL® from Mitsui Chemical or as TOPAS® from TOPAS Advanced Polymers.

The glass transition temperature (hereinafter also referred to as "Tg") of the cyclic olefin polymer composition (B) may be controlled by the type of monomers used, *e.g.* by the type of the at least one cyclic olefin monomer and optionally, if present, by the type of the non-cyclic olefin monomer. If the cyclic olefin polymer composition (B) is a blend of at least two cyclic olefin polymers, the weight ratio of the cyclic olefin polymers has an influence on the glass transition temperature of the compositions as well. Further, in case the cyclic olefin polymer composition (B) is a composition comprising at least one cyclic olefin copolymer, the amount of the cyclic olefin monomer may be used to customize the glass transition temperature of the overall composition. From norbornene-ethylene copolymers it is, for example, known that a higher glass transition temperature may be achieved by increasing the content of norbornene. The same applies to combinations of other cyclic olefin monomers with non-cyclic olefin monomers.

The cyclic olefin polymer composition (B) may comprise cyclic olefin units, for example norbornene units, in a content of from 70 to 90 wt.-%, preferably from 75 to 85 wt.-%, more preferably from 75 to 80 wt.-%, and non-cyclic olefin units, for example ethylene units, in a content of from 10 to 30 wt.-%, preferably from 15 to 25 wt.-%, more preferably from 20 to 25 wt.-%, wherein the contents are each based on the total weight of the cyclic olefin polymer composition (B). The content of the cyclic olefin units of the cyclic olefin polymer (B) may be determined by $^{13}$C NMR spectroscopy, in case the cyclic olefin polymer (B) is soluble, or may be calculated from the glass transition temperature of the cyclic olefin polymer, in case in case the cyclic olefin polymer (B) is insoluble. If the cyclic olefin polymer (B) is a norbornene-ethylene copolymer and the cyclic olefin units are norbornene units, their content can be determined as described in Macromol. Chem. Phys. 199, 1221-1232 (1998).

In a preferred embodiment, the cyclic olefin polymer composition (B) may have a glass transition temperature, measured according to ISO 11357-3, in the range of from 130 to 160 °C. In another preferred embodiment, the cyclic olefin polymer composition (B) may have a glass transition temperature in the range of from 140 to 155 °C, measured according to ISO 11357-3.

Additionally or alternatively the cyclic olefin polymer composition (B) may have a $MFR_2$ (260 °C, 2.16 kg), measured according to ISO 1133, of from 2 to 50 g/10 min, preferably from 8 to 25 g/10 min.

In a particularly preferred embodiment, the cyclic olefin polymer composition (B) comprises or essentially consists of at least a first cyclic olefin polymer (b1) and a second cyclic olefin polymer (b2). The first cyclic olefin polymer preferably has a glass transition temperature, measured according to ISO 11357, of below 140 °C, such as from 60 to below 140 °C, like from 100 to below 140 °C. The second cyclic olefin polymer preferably has a glass transition temperature, measured according to ISO 11357, of at least 155 °C, in particular of from at least 155 to 190 °C. The first cyclic olefin polymer and the second cyclic olefin polymer may be melt-blended to form the cyclic olefin polymer composition, preferably in a weight ratio of 1:5 to 5:1, in particular in a weight ratio of 1:3 to 3:1.

It is assumed that the use of two cyclic olefin polymer with different glass transition temperatures results in a broad glass transition temperature step of the polypropylene composition and is, thus, responsible for an extended processing

window of the polypropylene composition. Moreover, the use of two cyclic olefin polymers with different glass transition temperatures results in a better control of the high-temperature performance of the material.

Component (C)

In a further embodiment, the random propylene copolymer compatibilizer (C) has a melt flow rate $MFR_2$ (2.16 kg/230 °C), measured according to ISO 1133, of from 1.0 to 100 g/10 min, preferably of from 1.5 to 75 g/10 min, more preferably of from 2.0 to 50 g/10 min.

Furthermore, the random propylene copolymer compatibilizer (C) may have a melting point, measured according to ISO 11357-3 of 150 °C or less, preferably less than 150.0 °C, more preferably of more than 130.0 °C to less than 150.0 °C, most preferably of more than 140.0 °C to less than 149.0 °C. In the measurement according to ISO 11357-3 a heating and cooling rate of 10 K/min may be applied.

Additionally or alternatively, the random propylene copolymer compatibilizer (C) may have an ethylene content of from 0.5 to 8.0 wt.-%, preferably of from 1.0 wt.-% to 4.0 wt.-%, more preferably of from 2.0 to 3.8 wt.-%. The ethylene content of the random propylene copolymer compatibilizer (C) may be measured by NMR.

The random propylene copolymer compatibilizer (C) may also comprise one or more additives. Preferably the one or more additives are present in a content from 0 to 2.0 wt.-%, more preferably in an amount from 0.05 to 1.0 wt.-%, in particular in an amount from 0.05 to 0.5 wt.-%, based on the weight of the random propylene copolymer compatibilizer (C).

The one or more additives may be non-polymeric additives and/or polymeric additives, with non-polymeric additives being preferred. For example, the one or more additives may be selected from the group consisting of antioxidants, stabilizers, acid scavengers, nucleating agents, colorants, plasticizers, slip agents, antiscratch agents, dispersing agents, processing aids, lubricants, pigments, antistatic agent, and the like. It is particularly preferred when the one or more additives are selected from the group consisting of antioxidants, stabilizers and acid scavengers and combinations thereof. Suitable examples for additive compounds have already been described in the context of component (A) above.

Suitable conditions for manufacturing component (C) are inter alia described in WO 2014/187686 Al and WO 2014/187687 Al.

Component (C) according to the present invention may be produced in a sequential polymerization process in the presence of a Ziegler-Natta catalyst as defined below.

Accordingly it is preferred that component (C) is produced in the presence of (a) a Ziegler-Natta catalyst (ZN-C), preferably a Ziegler-Natta catalyst (ZN-C) comprising a titanium compound (TC), a magnesium compound (MC) and an internal donor (ID), wherein said internal donor (ID) is preferably a non-phthalic acid ester, (b) optionally a co-catalyst (Co), and (c) optionally an external donor (ED).

Component (C) may be produced in a sequential polymerization process comprising at least two reactors (R1) and (R2), in the first reactor (R1) the first propylene copolymer fraction (R-PP1) is produced and subsequently transferred into the second reactor (R2), in the second reactor (R2) the second propylene copolymer fraction (R-PP2) is produced in the presence of the first propylene copolymer fraction (R-PP1).

The term "sequential polymerization system" indicates that the propylene copolymer (R-PP) is produced in at least two reactors connected in series. Accordingly the present polymerization system comprises at least a first polymerization reactor (R1) and a second polymerization reactor (R2), and optionally a third polymerization reactor (R3). The term "polymerization reactor" shall indicate that the main polymerization takes place. Thus in case the process consists of two polymerization reactors, this definition does not exclude the option that the overall system comprises for instance a pre-polymerization step in a pre-polymerization reactor. The term "consist of' is only a closing formulation in view of the main polymerization reactors. Preferably at least one of the two polymerization reactors (R1) and (R2) is a gas phase reactor (GPR). Still more preferably the second polymerization reactor (R2) and the optional third polymerization reactor (R3) are gas phase reactors (GPRs), i.e. a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.

A preferred multistage process is a "loop-gas phase"-process, such as developed by Borealis A/S, Denmark (known as BORSTAR® technology) described e.g. in patent literature, such as in EP 0 887 379 Al, WO 92/12182 Al, WO 2004/000899 A1, WO 2004/111095 Al, WO 99/24478 Al, WO 99/24479 Al or in WO 00/68315 A1. A further suitable slurry-gas phase process is the Spheripol® process of Basell.

A process for manufacturing component (C) may comprise the following steps under the conditions (a) in the first polymerization reactor (R1), i.e. in a loop reactor (Loop), propylene and a comonomer being ethylene and/or a $C_4$ to $C_{12}$ alpha-olefin, preferably propylene and ethylene, are polymerized obtaining a first propylene copolymer fraction (R-PP1) of the propylene copolymer (R-PP), (b) transferring said first propylene copolymer fraction (R-PP1) to a second polymerization reactor (R2), (c) in the second polymerization reactor (R2) propylene and a comonomer being ethylene and/or a $C_4$ to $C_{12}$ alpha-olefin, preferably propylene and ethylene, are polymerized in the presence of the first propylene copolymer

fraction (R-PP1) obtaining a second propylene copolymer fraction (R-PP2) of the propylene copolymer (R-PP), said first propylene copolymer fraction (R-PP1) and said second propylene copolymer fraction (R-PP2) form the propylene copolymer (R-PP).

A pre-polymerization as described above can be accomplished prior to step (a).

As pointed out above in the specific process for the preparation of component (C) it is preferable to use Ziegler-Natta catalyst (ZN-C). Accordingly the Ziegler-Natta catalyst (ZN-C) will be now described in more detail.

The catalyst which may be used for preparing component (C) is preferably a solid Ziegler-Natta catalyst (ZN-C), which comprises a titanium compound (TC), a magnesium compound (MC) and an internal donor (ID), wherein said internal donor (ID) is a non-phthalic acid ester, most preferably diester of non-phthalic dicarboxylic acids. Thus, the catalyst used in the present invention is fully free of undesired phthalic compounds The Ziegler-Natta catalyst (ZN-C) can be further defined by the way as obtained. Accordingly the Ziegler-Natta catalyst (ZN-C) is preferably obtained by a process comprising the steps of a) providing a solution of at least one complex being a complex of a magnesium compound (MC) and an alcohol comprising in addition to the hydroxyl moiety at least one further oxygen bearing moiety being different to a hydroxyl group, and optionally at least one complex being a complex of said magnesium compound (MC) and an alcohol not comprising any other oxygen bearing moiety, b) combining said solution with a titanium compound (TC) and producing an emulsion the dispersed phase of which contains more than 50 mol.-% of the magnesium; c) agitating the emulsion in order to maintain the droplets of said dispersed phase preferably within an average size range of 5 to 200 μm; d) solidifying said droplets of the dispersed phase; e) recovering the solidified particles of the olefin polymerization catalyst component, and wherein an internal donor (ID) is added at any step prior to step c) and said internal donor (ID) is non-phthalic acid ester, preferably said internal donor (ID) is a diester of non-phthalic dicarboxylic acids.

Detailed description as to how such a Ziegler-Natta catalyst (ZN-C) can be obtained as disclosed in WO 2012/007430 Al.

## Film

The present invention furthermore provides a film comprising the polypropylene composition as described above. The film may be a compression moulded film. In this case, the film may be produced by means of a mould with a thickness of 10 to 300 μm, preferably with a thickness of 10 to 100 μm, more preferably with a thickness of 20 to 80 μm, in particular with a thickness of 60 μm, and at a temperature in a range from 190 to 230°C. Alternatively, the film may be a cast film. Optionally, the film may be a biaxially oriented film (BOPP). In particular, the film can be a cast film that has been biaxially oriented (BOPP).

The film preferably has a thickness from 1 to 1000 μm, more preferably from 1 to 300 μm, most preferably from 1 to 250 μm, in particular from 1 to 100 μm. This is especially advantageous since current attempts are to provide electric systems with higher energy density and efficiency. Reducing the space requirement for a film in film capacitors helps to achieve this goal.

If provided as a film with a thickness of 100 μm, the film preferably has an electrical conductivity of less than $6.0 \cdot 10^{-15}$ S/cm, preferably less than $3.0 \cdot 10^{-16}$ S/cm, more preferably in a range of from more than $3.0 \cdot 10^{-17}$ S/cm to less than $3.0 \cdot 10^{-16}$ S/cm, wherein the electrical conductivity is measured by means of a dielectric spectrometer with an alternating current at a frequency of $10^{-2}$ Hz at a temperature of 130 °C.

Furthermore, the film may have an average diameter of the domains of the cyclic olefin polymer composition (B), as visually determined in AFM images of 10x10 $\mu m^2$ cut-outs of the film with a thickness of 300 μm, being less than 2.0 μm, preferably in a range of from 0.1 to less than 2.0 μm, more preferably in a range of from 0.2 to 1.0 μm. The average of the diameter may be formed based on an evaluation of more than 30 samples.

The biaxially oriented polypropylene film according to the present invention may be obtained in two steps. In a first step, a non-oriented film is produced by extruding the polypropylene composition through a flat die. In a second step, the non-oriented film is stretched in machine direction (MD) and transverse direction (TD). The stretching or orientation of the non-oriented film may be performed simultaneously in machine direction and transverse direction. The two steps of the method may preferably be conducted in a continuous process. Alternatively, the non-oriented film may be collected and cooled with a rotating chill roll for solidification of the film and may later on be stretched.

In an embodiment, the biaxially oriented polypropylene film comprises at least 80 wt.-%, more preferably comprises at least 90 wt.-%, yet more preferably consists of, the polypropylene composition as defined in the present invention. The biaxially oriented polypropylene film preferably has a stretching ratio of at least 2.5 times, preferably at least 3.0 times, more preferably at least 4 times, in particular at least 5 times, in the machine direction and at least 2.5 times, preferably at least 3.0 times, more preferably at least 4 times, in particular at least 5 times, in the transverse direction, more preferably has a stretching ratio of at least 9 times in the machine direction and at least 5 times in the transverse direction.

The biaxially oriented polypropylene film can be prepared by conventional drawing processes known in the art. Accordingly, the process for the manufacture of a biaxially oriented polypropylene film preferably may make use of the tenter method known in the art.

The tenter method is a method in which the polypropylene composition as defined herein is melt extruded from a slit die such as a T-die and cooled on a cooling drum obtaining a non-oriented film. Said film is pre-heated, for example with a heated metal roll, and then stretched in the length direction between a plurality of rolls over which a difference in peripheral speeds is established and then both edges are gripped with grippers and the sheet is stretched in the transverse direction in an oven by means of a tenter resulting in a biaxially oriented film. The temperature of said film during the longitudinal drawing is preferably controlled in such a way as to be within the temperature range of the melting point of the polypropylene composition.

Subsequently, the biaxially oriented film can be treated by corona discharge in air, nitrogen, carbon dioxide gas or any of the mixtures. If the film should be metallized for film capacitor applications, this enhances the adhesive strength to the metal that is to be deposited.

Capacitor

In another aspect, the present invention relates to a capacitor comprising the biaxially oriented film as described above. Capacitors comprising this biaxially oriented film are expected to have a longer lifetime and a higher temperature resistance than conventional capacitors. Preferably, the biaxially oriented film as described above is metallized and the capacitor is a metalized film capacitor. The metallization of the biaxially oriented film can be performed by any process that is known in the art, for example by evaporation, electrodeposition, melting, ion beam vacuum deposition, sputtering or ion plating. The thickness of the obtained metal layer may be from 100 Å (0.01 $\mu$m) to 5000 Å (0.5 $\mu$m).

Alternative polypropylene composition

In a second, alternative aspect, a polypropylene composition is provided which comprises a high isotactic homopolymer (A) of propylene, a cyclic olefin polymer composition (B) and a random propylene copolymer compatibilizer (C), wherein the high isotactic homopolymer (A) of propylene is present in an amount of 70 wt.-% or more based on the total weight of the polypropylene composition and wherein a weight ratio (C)/(B) of the random propylene copolymer compatibilizer (C) to the cyclic olefin polymer composition (B) is in a range of from 0.01 to 0.2, with the proviso that the contents of components (A) to (C) add up to 100 wt.-%.

The polypropylene composition according to this second aspect can also be processed into a film (oriented or non-oriented) in the same way as the polypropylene composition as described before. Also a capacitor comprising the biaxially oriented film can be prepared from the polypropylene composition according to the second aspect. Furthermore, the preferred features of components (A)-(C) as defined above equally apply to the polypropylene composition according to the second aspect.

## Brief Description of the Drawings

Embodiments of the present invention are illustrated by way of example and are not limited by the figures of the accompanying drawings.

Figs. 1 to 7 shows atomic force microscope images of exemplary non-oriented films consisting of the polypropylene compositions CE1 and IE1-IE6.

## Detailed Description of the Drawings and Examples

Measurement Methods

*Quantification of C2 content by NMR spectroscopy*

Quantitative nuclear-magnetic resonance (NMR) spectroscopy was used to quantify the comonomer content of the polymers. Quantitative $^{13}C\{^1H\}$ NMR spectra were recorded in the solution-state using a Bruker Avance III 400 NMR spectrometer operating at 400.15 and 100.62 MHz for and $^1H$ and $^{13}C$ respectively. All spectra were recorded using a $^{13}C$ optimized 10 mm extended temperature probehead at 125°C using nitrogen gas for all pneumatics.

Approximately 200 mg of material was dissolved in 3 mL of 1,2-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bilevel WALTZ16 decoupling scheme (Zhou, Z., Kuemmerle, R., Qiu, X., Redwine, D., Cong, R., Taha,

A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}C\{^{1}H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

The comonomer fraction was quantified using the method of Wang et. al. (Wang, WJ., Zhu, S., Macromolecules 33 (2000), 1157) through integration of multiple signals across the whole spectral region in the $^{13}C\{^{1}H\}$ NMR spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed, the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

The ethylene incorporation in mole percent was computed as follows:

$$E\ [mol\%] = 100 * fE$$

The ethylene incorporation in weight percent was calculated from the mole fraction as follows:

$$E\ [wt.\text{-}\%] = 100 * (\ fE * 28.06\ ) / (\ (fE * 28.06) + ((1\text{-}fE) * 42.08)\ )$$

*Quantification of isotacticity by NMR spectroscopy*

Quantitative nuclear-magnetic resonance (NMR) spectroscopy was also used to quantify the isotacticity of the polymers.

Quantitative $^{13}C\{^{1}H\}$ NMR spectra were recorded in the solution-state using a Bruker Advance III 400 NMR spectrometer operating at 400.15 and 100.62 MHz for $^{1}H$ and $^{13}C$ respectively. All spectra were recorded using a $^{13}C$ optimized 10 mm extended temperature probehead at 125 °C using nitrogen gas for all pneumatics.

For polypropylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromoleucles 30 (1997) 6251). Standard single-pulse excitation was employed utilizing the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^{1}H\}$ NMR spectra were processed, integrated and relevant quantitative properties determined from the integrals using proprietary computer programs.

For polypropylene homopolymers all chemical shifts are internally referenced to the methyl isotactic pentad <mmmm> at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest(Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm)

sequences with respect to all pentad sequences:

$$[mmmm]\,\% = 100 * (\text{ mmmm } / \text{ sum of all pentads })$$

*$MFR_2$*

The $MFR_2$ was measured according to ISO 1133 (at 2.16 kg load) and either at a temperature of 230 °C (for the high isotactic homopolymer of propylene) or at a temperature of 260 °C (cyclic olefin polymer).

*XCS content*

The XCS content was determined in weight percent according to ISO 16152 as follows:

2.0 g of the sample were dissolved in 250 ml p-xylene at 135 under agitation. After 30 minutes, the solution was allowed to cool for 15 minutes at ambient temperature and then allowed to settle for 30 minutes at 25 +/- 0.5 °C. The solution was filtered with filter paper into two 100 mL flasks. The solution from the first 100 mL flask was evaporated in nitrogen flow and the residue dried under vacuum at 90 until constant weight is reached. The xylene soluble fraction (in weight percent) can then be determined as follows:

$$XCS = (100*m*V_0)/(m_0*v)$$

with $m_0$ = initial polymer amount (g); m = weight of residue (g); $V_0$ = initial volume (ml); v = volume of analyzed sample (mL).

*Glass transition temperature Tg*

The glass transition temperature was measured with a differential scanning calorimeter according to ISO 11357 at a scan rate of 10 K/min.

*Melting temperature Tm, crystallization temperature Tc*

Differential Scanning Calorimetry (DSC) experiments were run on a TA Instruments Q2000 device calibrated with Indium, Zinc, Tin according to ISO 11357/1. The measurements were run under nitrogen atmosphere (50 mL $min^{-1}$) on 5 $\pm$0.5 mg samples in a heat/cool/heat cycle with a scan rate of 10 K/min between -30 °C and 225 °C according to ISO 11357/3. Melting (Tm) and crystallization (Tc) temperatures were taken as the peaks of the endotherms and exotherms in the cooling cycle and the second heating cycle respectively.

*Ash content*

The ash content of the polymer was determined according to measured according to ISO 3451-1 (1997). Doing so, about 100 g of polymer were weighed into a platinum crucible. The crucible is then heated in a Bunsen burner flame so that the polymer slowly burns. After the polymer is completely burned the crucible is cooled, dried and weighed. The ash content is then the weight of the residue divided by the weight of the polymer sample. At least two measurements are made and if the difference between the measurements is more than 7 ppm then a third measurement is made.

*Morphological Properties*

Non-oriented film samples with a thickness of 300 μm were prepared from the polypropylene compositions and cut on an ultra-cryo microtome in the core of the films and perpendicular to the machine direction (MD). No surface treatment has been performed.

The dimensions of the domains which are formed by component (B) were analyzed with an atomic force microscope (AFM).

In addition to the "normal" scan, a scan with a qualitative amplitude-modulation-frequency-modulation (AM-FM) was run, because the latter gives better differentiation of the different phases. Comparisons were made based one images

of 10 x 10 $\mu m^2$ large surface areas of the film.

*Electrical Properties*

Non-oriented film samples with a thickness of 100 $\mu$m were prepared from the polypropylene compositions and cut on an ultra-cryo microtome in the core of the films and perpendicular to the machine direction (MD). No surface treatment has been performed.

Electric properties were assessed by dielectric spectroscopy (DS) measurements of the specimen. These measurements were conducted with a Novocontrol Alpha frequency analyzer, at different temperatures in the range from 80 to 150 °C or from 80 to 160 °C and atmospheric pressure. The frequency range of the DS measurements was 0.01 Hz. The specimen of the film was placed between two identical electrodes with a diameter of 40 mm. The measurements were performed under a nitrogen atmosphere.

Materials

*Components (A) and (B)*

The polymers as listed in table 1 below have been used to prepare example materials.

**Table 1:** Polymers used for the production of CE1 and IE1-IE6.

| | |
|---|---|
| **A1** | Capacitor high isotacticity homopolymer PP<br>$MFR_2$ = 3.3 g/10min, Tc =115 °C,<br>Ash content < 20 ppm, <mmmm> = 97.2%<br>Commercially available as HC300BF from Borealis |
| **B1** | Ethylene-norbornene copolymer<br>Norbornene content = 75.0 wt.-%<br>Tg = 134 °C, $MFR_2$ = 48 g/10 min<br>Commercially available as TOPAS COC 5013S-04 from TOPAS |
| **B2** | Ethylene-norbornene copolymer<br>Tg = 158 °C<br>$MFR_2$ = 5 g/10 min<br>Norbornene content = 79.0 wt.-%<br>Commercially available as TOPAS COC 6015S-04 from TOPAS |

*Component (C)*

Additionally, component (C) has been obtained according to the explanations below and has been used to prepare example materials.

**C1-C3** are polypropylene random copolymers which have been prepared in a sequential process comprising a prepolymerization reactor (Prepoly), a loop reactor (Loop) and a gas phase reactor (GPR1).

The catalyst used in the polymerization process for manufacturing **C1-C3** was prepared as follows:

*Preparation of the Mg alkoxy compound*

3.4 L of 2-ethylhexanol and 810 mL of propylene glycol butyl monoether (in a molar ratio 4/1) were added to a 20 L reactor. Then 7.8 L of a 20 % solution in toluene of BEM (butyl ethyl magnesium) were slowly added to the well stirred alcohol mixture. During the addition the temperature was kept at 10 °C. After addition the temperature of the reaction mixture was raised to 60 °C and mixing was continued at this temperature for 30 minutes. Finally after cooling to room temperature the obtained Mg-alkoxide was transferred to storage vessel.

21.2 g of Mg alkoxide prepared above was mixed with 4.0 mL bis(2-ethylhexyl) citraconate for 5 min. After mixing the obtained Mg complex was used immediately in the preparation of catalyst component.

*Preparation of solid catalyst component*

19.5 ml titanium tetrachloride was placed in a 300 ml reactor equipped with a mechanical stirrer at 25 °C. Mixing

speed was adjusted to 170 rpm. 26.0 of Mg-complex prepared above was added within 30 minutes keeping the temperature at 25 °C. 3.0 mL of Viscoplex 1-254 and 1.0 ml of a toluene solution with 2 mg Necadd 447 was added. Then 24.0 mL of heptane was added to form an emulsion. Mixing was continued for 30 minutes at 25 °C. Then the reactor temperature was raised to 90 °C within 30 minutes. The reaction mixture was stirred for further 30 minutes at 90 °C. Afterwards stirring was stopped and the reaction mixture was allowed to settle for 15 minutes at 90 °C.

*Washes*

The solid material was washed 5 times: Washings were made at 80 °C under stirring 30 min with 170 rpm. After stirring was stopped the reaction mixture was allowed to settle for 20-30 minutes and followed by siphoning.

Wash 1: Washing was made with a mixture of 100 mL of toluene and 1 mL donor

Wash 2 : Washing was made with a mixture of 30 mL of $TiCl_4$ and 1 mL of donor.

Wash 3: Washing was made with 100 mL toluene.

Wash 4 : Washing was made with 60 mL of heptane.

Wash 5: Washing was made with 60 mL of heptane under 10 minutes stirring. Afterwards stirring was stopped and the reaction mixture was allowed to settle for 10 minutes decreasing the temperature to 70 °C with subsequent siphoning, and followed by $N_2$ sparging for 20 minutes to yield an air sensitive powder.

*Use of the catalyst for Polymerization of Component (C)*

The molar ratio of co-catalyst (Co) to external donor (ED) [Co/ED] and the molar ratio of co-catalyst (Co) to titanium compound (TC) [Co/TC] are indicated in Table 2. The polymerization conditions are also indicated in Table 2.

In addition to the polymerization conditions in table 2, C1 was visbroken by using a co-rotating twin-screw extruder at 200-230°C and using an appropriate amount of (tert.-butylperoxy)-2,5-dimethylhexane (Trigonox 101, distributed by Akzo Nobel, Netherlands) to achieve the target $MFR_2$ of 8 g/10min.

**Table 2:** Polymerization conditions in the preparation of the compatibilizers C1-C3.

| | | **C1** | **C2** | **C3** |
|---|---|---|---|---|
| **Prepoly** | | | | |
| Co/ED | mol/mol | 5 | 10 | 10 |
| Co/TC | mol/mol | 90 | 80 | 150 |
| Temperature | °C | 30 | 20 | 20 |
| Residence time | min | 0.3 | 0.4 | 0.5 |
| **Loop** | | | | |
| Temperature | °C | 70 | 10 | 75 |
| Pressure | kPa | 5400 | 5500 | 5500 |
| Split | wt.-% | 45 | 45 | 55 |
| H2/C3 | mol/kmol | 0.8 | 2.5 | 3.1 |
| C2/C3 | mol/kmol | 4.8 | 3.8 | 8.0 |
| $MFR_2$ | g/10min | 2.1 | 13 | 30 |
| C2 | wt.-% | 2.1 | 2.8 | 3.7 |
| XCS | wt.-% | 5.0 | 5.5 | 8.5 |
| **GPR1** | | | | |
| Temperature | °C | 80 | 85 | 75 |
| Pressure | kPa | 2200 | 2100 | 2100 |

(continued)

| **GPR1** | | | | |
|---|---|---|---|---|
| Split | wt.-% | 55 | 55 | 45 |
| H2/C3 | mol/kmol | 5.3 | 6.3 | 16.5 |
| C2/C3 | mol/kmol | 10.2 | 3.8 | 18.9 |
| $MFR_2$ | g/10min | 1.6 | 13 | 30 |
| C2 | wt.-% | 2.1 | 16.7 | 3.7 |
| XCS | wt.-% | 5.0 | 5.5 | 9.0 |
| **Mixer** | | | | |
| C2 | wt.-% | 2.1 | 3.4 | 3.7 |
| $MFR_2$ | g/10min | 1.8 | 13 | 30 |
| **Pellet** | | | | |
| $MFR_2$ | g/10min | 8 | 13 | 30 |
| XCS | wt.-% | 5.0 | 6.5 | 9.0 |
| Tm | °C | 148.9 | 148.5 | 150.1 |
| Tc | °C | 106 | 119 | 122 |
| **Additives** | | | | |
| (a) | wt.-% | 0.03 | 0.05 | 0.05 |
| (b) | wt.-% | 0.07 | 0.05 | 0.05 |
| (c) | wt.-% | 0.02 | 0.00 | 0.00 |
| (d) | wt.-% | 0.00 | 0.10 | 0.10 |
| (e) | wt.-% | 0.00 | 0.06 | 0.06 |
| (f) | wt.-% | 0.00 | 0.17 | 0.17 |
| (a) Pentaerythrityl-tetrakis(3-(3',5'-di-tert. butyl-4-hydroxyphenyl)-propionate, CAS-No. 6683-19-8, Irganox 1010 of BASF SE, Germany<br>(b) Tris (2,4-di-t-butylphenyl) phosphite, CAS-No. 31570-04-4, Irgafos 168 of BASF SE, Germany<br>(c) Mg-oxide, CAS-No. 1309-48-4<br>(d) Ca-stearate, CAS-No. 1592-23-0<br>(e) Glycerol monostearate, CAS-No. 31566-31-1<br>(f) 1,3:2,4 Bis(3,4-dimethylbenzylidene) sorbitol, CAS-No. 135861-56-2, Millad 3988 of Milliken, USA | | | | |

Polypropylene compositions

The materials as outlined above have been blended in the ratios as listed in Table 3 order to obtain polypropylene compositions.

**Table 3:** Inventive polypropylene compositions IE1-IE6 (compatibilized) as opposed to comparative polypropylene composition CE1 (uncompatibilized).

| | **CE1** | **IE1** | **IE2** | **IE3** | **IE4** | **IE5** | **IE6** |
|---|---|---|---|---|---|---|---|
| **A** | 80.0 | 79.5 | 79.0 | 79.5 | 79.0 | 79.5 | 79.0 |
| **B1** | 10.0 | 10.0 | 10.0 | 10.0 | 10.0 | 10.0 | 10.0 |
| **B2** | 10.0 | 10.0 | 10.0 | 10.0 | 10.0 | 10.0 | 10.0 |
| **C1** | - | 0.5 | 1.0 | - | - | - | - |
| **C2** | - | - | - | 0.5 | 1.0 | - | - |

(continued)

| | CE1 | IE1 | IE2 | IE3 | IE4 | IE5 | IE6 |
|---|---|---|---|---|---|---|---|
| C3 | - | - | - | - | - | 0.5 | 1.0 |

Films

The polypropylene compositions IE1-IE6 and CE1 have been compression moulded into a film by using a mould with a thickness of 60 μm. Electrical properties have been measured on the non-oriented compression moulded film (which had a thickness of about 100 μm after releasing it from the mould) according to the method as described above. Morphological properties have been measured on non-oriented films made of the polypropylene compositions IE1-IE6 and CE1 with a thickness of 300 μm (also referred to as 300 μm thick plaques) according to the method as described above. The results of the measurements can be found in Table 4 below.

In particular, in order to obtain the average diameter of the domains of component (B), all (B)-domains visible in the AFM-images were analyzed. The diameter of each domain was measured manually and the value reported in Table 4 is the average of all the domains diameters.

**Table 4:** Morphological and electrical properties of CE1 as opposed to IE1-IE6.

| | CE1 | IE1 | IE2 | IE3 | IE4 | IE5 | IE6 |
|---|---|---|---|---|---|---|---|
| **Morphological Properties Average Diameter of Domains of Component (B)** | | | | | | | |
| **D in μm** | 2 | 0.79 | 0.35 | 0.36 | 0.3 | 0.31 | 0.66 |
| **Electrical Properties Electrical Conductivity in S/cm** | | | | | | | |
| **@ 110 °C** | 7.24E-17 | 1.12E-16 | 4.19E-17 | 5.85E-17 | 5.20E-17 | 4.08E-17 | 1.17E-15 |
| **@ 120 °C** | 3.58E-16 | 6.41E-16 | 1.95E-16 | 2.62E-16 | 2.70E-16 | 1.91E-16 | 5.46E-15 |
| **@ 130 °C** | 1.64E-15 | 3.54E-15 | 9.30E-16 | 1.14E-15 | 1.42E-15 | 9.50E-16 | 2.08E-14 |
| **@ 140 °C** | 6.01E-15 | 1.33E-14 | 3.96E-15 | 4.38E-15 | 5.28E-15 | 4.21E-15 | 5.95E-14 |
| **@ 150 °C** | 1.65E-14 | 3.64E-14 | 1.22E-14 | 1.38E-14 | 1.30E-14 | 1.37E-14 | 1.23E-13 |

Moreover, the AFM images of the films with compositions CE1 and IE1-IE6 are also depicted in figures 1-7 proving that a more finely dispersed phase of component (B) is achieved for films with the inventive compositions IE1-IE6.

Here, it may be seen that the electrical conductivity of the inventive films IE2, IE3, IE5 and IE6 is improved relative to the electrical conductivity of the comparative film CE1 at temperatures above 100°C.

## Claims

**1.** Polypropylene composition comprising

70 to 95 wt.-%, preferably 74.75 to 90 wt.-%, based on the total weight of the polypropylene composition of a high isotactic homopolymer (A) of propylene,
more than 2.5 to less than 30 wt.-%, preferably 5 to 25 wt.-% based on the total weight of the polypropylene composition of a cyclic olefin polymer composition (B), and
0.1 to 2.5 wt.-%, preferably 0.25 to 2 wt.-% based on the total weight of the polypropylene composition of a random propylene copolymer compatibilizer (C).

**2.** Polypropylene composition according to claim 1, wherein the weight ratio (C)/(B) of the random propylene copolymer compatibilizer (C) to the cyclic olefin polymer composition (B) is in a range of from 0.01 to 0.2, preferably of from 0.01 to 0.1, more preferably of from 0.02 to 0.075, even more preferably from 0.02 to 0.05.

**3.** Polypropylene composition according to one of the preceding claims, wherein the random propylene copolymer compatibilizer (C) has a melt flow rate $MFR_2$ (2.16 kg/230 °C), measured according to ISO 1133, of from 1.0 to 100 g/10 min, preferably of from 1.5 to 75 g/10 min, more preferably of from 2.0 to 50 g/10 min.

4. Polypropylene composition according to one of the preceding claims, wherein the random propylene copolymer compatibilizer (C) has at least one of:

- a melting point, measured according to ISO 11357-3 of 150 °C or less, preferably of less than 150.0 °C, more preferably of more than 130.0 °C to less than 150.0 °C, most preferably of more than 140.0 °C to less than 149.0 °C and
- an ethylene content, measured by NMR, of from 0.5 to 8.0 wt.-%, preferably of from 1.0 wt.-% to 4.0 wt.-%, more preferably of from 2.0 to 3.8 wt.-%.

5. Polypropylene composition according to one of the preceding claims, wherein the random propylene copolymer compatibilizer (C) is obtained by polymerizing propylene and a comonomer being ethylene and/or a $C_4$ to $C_{12}$ alpha-olefin in the presence of

a Ziegler-Natta catalyst, preferably a Ziegler-Natta catalyst comprising a titanium compound, a magnesium compound and an internal donor, wherein said internal donor is more preferably a non-phthalic acid ester,
optionally a co-catalyst, and
further optionally an external donor.

6. Polypropylene composition according to one of the preceding claims, wherein the cyclic olefin polymer composition (B) has at least one of:

- a glass transition temperature, measured according to ISO 11357-3, in the range of from 130 to 160 °C, preferably in the range of from 140 to 155 °C, and
- a $MFR_2$ (2.16 kg/260 °C), measured according to ISO 1133, of from 2 to 50 g/10 min, preferably from 8 to 25 g/10 min.

7. Polypropylene composition according to one of the preceding claims, wherein the cyclic olefin polymer composition (B) is a cyclic olefin copolymer composition,

preferably a cyclic olefin copolymer composition comprising:

- cyclic olefin units, for example norbornene units, in a content of from 70 to 90 wt.-%, preferably from 75 to 85 wt.-%, more preferably from 75 to 80 wt.-%, and
- non-cyclic olefin units, for example ethylene units, in a content of from 10 to 30 wt.-%, preferably from 15 to 25 wt.-%, more preferably from 20 to 25 wt.-%,

wherein the contents are each based on the total weight of the cyclic olefin polymer composition (B).

8. Polypropylene composition according to one of the preceding claims, wherein the cyclic olefin polymer composition (B) comprises at least one cyclic olefin copolymer selected from the group of norbornene-ethylene copolymers and tetracyclododecene-ethylene copolymers or a blend of at least two of said cyclic olefin copolymers.

9. Polypropylene composition according to one of the preceding claims, wherein the cyclic olefin polymer composition (B) comprises at least a first cyclic olefin polymer (b1) and a second cyclic olefin polymer (b2), wherein the first cyclic olefin polymer (b1) preferably has a glass transition temperature, measured according to ISO 11357, of below 140 °C, in particular of from 60 to below 140°C, and the second cyclic olefin polymer (b2) preferably has a glass transition temperature, measured according to ISO 11357, of at least 155 °C, in particular of from at least 155 to 190 °C.

10. Polypropylene composition according to one of the preceding claims, wherein the high isotactic homopolymer (A) of propylene has at least one of:

- a content of isotactic pentad fraction, measured with $^{13}C$ NMR, of from 93 to 99.5 %, preferably 95 to 99.0 %, more preferably from 96 to 98.5 %,
- a $MFR_2$ (2.16 kg/230 °C), measured according to ISO 1133, of from 0.4 to 10 g/10 min, preferably of from 0.5 to 5 g/10 min,
- an ash content, measured according to ISO 3451-1 (1997), of 60 ppm or less, preferably 30 ppm or less, and
- a crystallization temperature (Tc), measured according to ISO 11357, of from 110 to 130 °C, preferably from 110

to 120 °C.

**11.** Film comprising the polypropylene composition according to one of the preceding claims.

**12.** Film according to claim 11, having an electrical conductivity of less than $6.0 \cdot 10^{-15}$ S/cm, preferably less than $3.0 \cdot 10^{-16}$ S/cm, more preferably in a range of from more than $3.0 \cdot 10^{-17}$ S/cm to less than $3.0 \cdot 10^{-16}$ S/cm, wherein the electrical conductivity is measured by means of a dielectric spectrometer with an alternating current at a frequency of $10^{-2}$ Hz at a temperature of 130 °C and on the film having a thickness of 100 μm.

**13.** Film according to one of claims 11 and 12, wherein the average diameter of the domains of the cyclic olefin polymer composition (B) visually determined in AFM images of 10x10 $\mu m^2$ cut-outs of the film with a thickness of 300 μm is less than 2.0 μm, preferably in a range of from 0.1 to less than 2.0 μm, more preferably in a range of from 0.2 to 1.0 μm.

**14.** Biaxially oriented film comprising the polypropylene composition according to one of claims 1 to 10.

**15.** Capacitor comprising the biaxially oriented film according to claim 14.

**Patentansprüche**

**1.** Polypropylenzusammensetzung, umfassend

70 bis 95 Gew.-%, vorzugsweise 74,75 bis 90 Gew.-%, bezogen auf das Gesamtgewicht der Polypropylenzusammensetzung, eines hochisotaktischen Homopolymers (A) von Propylen,
mehr als 2,5 bis weniger als 30 Gew.-%, vorzugsweise 5 bis 25 Gew.-%, bezogen auf das Gesamtgewicht der Polypropylenzusammensetzung, einer Cycloolefin-Polymerzusammensetzung (B) und
0,1 bis 2,5 Gew.-%, vorzugsweise 0,25 bis 2 Gew.-%, bezogen auf das Gesamtgewicht der Polypropylenzusammensetzung, eines statistischen Propylen-Copolymer-Kompatibilisators (C).

**2.** Polypropylenzusammensetzung nach Anspruch 1, wobei das Gewichtsverhältnis (C)/(B) des statistischen Propylen-Copolymer-Kompatibilisators (C) zu der Cycloolefin-Polymerzusammensetzung (B) in einem Bereich von 0,01 bis 0,2, vorzugsweise von 0,01 bis 0,1, mehr bevorzugt von 0,02 bis 0,075, noch mehr bevorzugt von 0,02 bis 0,05 liegt.

**3.** Polypropylenzusammensetzung nach einem der vorstehenden Ansprüche, wobei der statistische Propylen-Copolymer-Kompatibilisator (C) eine Schmelzflussrate $MFR_2$ (2,16 kg/230 °C), gemessen gemäß ISO 1133, von 1,0 bis 100 g/10 min, vorzugsweise von 1,5 bis 75 g/10 min, mehr bevorzugt von 2,0 bis 50 g/10 min aufweist.

**4.** Polypropylenzusammensetzung nach einem der vorstehenden Ansprüche, wobei der statistische Propylen-Copolymer-Kompatibilisator (C) mindestens eines der Folgenden aufweist:

• einen Schmelzpunkt, gemessen gemäß ISO 11357-3, von 150°C oder weniger, vorzugsweise von weniger als 150,0 °C, mehr bevorzugt von mehr als 130,0 °C bis weniger als 150,0 °C, am meisten bevorzugt von mehr als 140,0 °C bis weniger als 149,0 °C und
• einen Ethylengehalt, gemessen durch NMR, von 0,5 bis 8,0 Gew.-%, vorzugsweise von 1,0 Gew.-% bis 4,0 Gew.-%, mehr bevorzugt von 2,0 bis 3,8 Gew.-%.

**5.** Polypropylenzusammensetzung nach einem der vorstehenden Ansprüche, wobei der statistische Propylen-Copolymer-Kompatibilisator (C) durch Polymerisieren von Propylen und einem Comonomer, bei dem es sich um Ethylen und/oder ein $C_4$- bis $C_{12}$-alpha-Olefin handelt, in Gegenwart von

einem Ziegler-Natta-Katalysator, vorzugsweise einem Ziegler-Natta-Katalysator, umfassend eine Titanverbindung, eine Magnesiumverbindung und einen internen Donor, wobei es sich bei dem internen Donor mehr bevorzugt um einen Nicht-Phthalsäure-Ester handelt,
optional einem Cokatalysator und
ferner optional einem externen Donor erhalten wird.

**6.** Polypropylenzusammensetzung nach einem der vorstehenden Ansprüche, wobei die Cycloolefin-Polymerzusammensetzung (B) mindestens eines der Folgenden aufweist:

• eine Glasübergangstemperatur, gemessen gemäß ISO 11357-3, im Bereich von 130 bis 160 °C, vorzugsweise im Bereich von 140 bis 155 °C, und
• eine $MFR_2$ (2,16 kg/260 °C), gemessen gemäß ISO 1133, von 2 bis 50 g/10 min, vorzugsweise von 8 bis 25 g/10 min.

**7.** Polypropylenzusammensetzung nach einem der vorstehenden Ansprüche, wobei die Cycloolefin-Polymerzusammensetzung (B) eine Cycloolefin-Copolymerzusammensetzung ist, vorzugsweise eine Cycloolefin-Copolymerzusammensetzung, umfassend:

• Cycloolefineinheiten, zum Beispiel Norborneneinheiten, in einem Gehalt von 70 bis 90 Gew.-%, vorzugsweise von 75 bis 85 Gew.-%, mehr bevorzugt von 75 bis 80 Gew.-%, und
• Nicht-Cycloolefineinheiten, zum Beispiel Ethyleneinheiten, in einem Gehalt von 10 bis 30 Gew.-%, vorzugsweise von 15 bis 25 Gew.-%, mehr bevorzugt von 20 bis 25 Gew.-%,

wobei die Gehalte jeweils auf das Gesamtgewicht der Cycloolefin-Polymerzusammensetzung (B) bezogen sind.

**8.** Polypropylenzusammensetzung nach einem der vorstehenden Ansprüche, wobei die Cycloolefin-Polymerzusammensetzung (B) mindestens ein Cycloolefin-Copolymer, ausgewählt aus der Gruppe von Norbornen-Ethylen-Copolymeren und Tetracyclododecen-Ethylen-Copolymeren, oder eine Mischung von mindestens zwei der Cycloolefin-Copolymere umfasst.

**9.** Polypropylenzusammensetzung nach einem der vorstehenden Ansprüche, wobei die Cycloolefin-Polymerzusammensetzung (B) mindestens ein erstes Cycloolefin-Polymer (b1) und ein zweites Cycloolefin-Polymer (b2) umfasst, wobei das erste Cycloolefin-Polymer (b1) vorzugsweise eine Glasübergangstemperatur, gemessen gemäß ISO 11357, von unter 140 °C, insbesondere von 60 bis unter 140 °C, aufweist und das zweite Cycloolefin-Polymer (b2) vorzugsweise eine Glasübergangstemperatur, gemessen gemäß ISO 11357, von mindestens 155 °C, insbesondere von mindestens 155 bis 190 °C, aufweist.

**10.** Polypropylenzusammensetzung nach einem der vorstehenden Ansprüche, wobei das hochisotaktische Homopolymer (A) von Propylen mindestens eines der Folgenden aufweist:

• einen Gehalt an isotaktischer Pentadenfraktion, gemessen mit $^{13}C$-NMR, von 93 bis 99,5 %, vorzugsweise 95 bis 99,0 %, mehr bevorzugt von 96 bis 98,5 %,
• eine $MFR_2$ (2,16 kg/230 °C), gemessen gemäß ISO 1133, von 0,4 bis 10 g/10 min, vorzugsweise von 0,5 bis 5 g/10 min,
• einen Aschegehalt, gemessen gemäß ISO 3451-1 (1997), von 60 ppm oder weniger, vorzugsweise 30 ppm oder weniger, und
• eine Kristallisationstemperatur (Tc), gemessen gemäß ISO 11357, von 110 bis 130 °C, vorzugsweise von 110 bis 120 °C.

**11.** Film, umfassend die Polypropylenzusammensetzung nach einem der vorstehenden Ansprüche.

**12.** Film nach Anspruch 11, mit einer elektrischen Leitfähigkeit von weniger als $6{,}0 \cdot 10^{-15}$ S/cm, vorzugsweise weniger als $3{,}0 \cdot 10^{-16}$ S/cm, stärker bevorzugt in einem Bereich von mehr als $3{,}0 \cdot 10^{-17}$ S/cm bis weniger als $3{,}0 \cdot 10^{-16}$ S/cm, wobei die elektrische Leitfähigkeit mittels eines dielektrischen Spektrometers mit einem Wechselstrom bei einer Frequenz von $10^{-2}$ Hz bei einer Temperatur von 130 °C und auf dem Film mit einer Dicke von 100 μm gemessen wird.

**13.** Film nach einem der Ansprüche 11 und 12, wobei der mittlere Durchmesser der Domänen der Cycloolefin-Polymerzusammensetzung (B), visuell bestimmt in AFM-Bildern von 10 x 10 $\mu m^2$ Ausschnitten des Films mit einer Dicke von 300 μm, weniger als 2,0 μm, vorzugsweise in einem Bereich von 0,1 bis weniger als 2,0 μm, stärker bevorzugt in einem Bereich von 0,2 bis 1,0 μm ist.

**14.** Biaxial orientierter Film, umfassend die Polypropylenzusammensetzung nach einem der Ansprüche 1 bis 10.

**15.** Kondensator, umfassend den biaxial orientierten Film nach Anspruch 14.

**Revendications**

1. Composition de polypropylène comportant :

   70 à 95 % en poids, de préférence 74,75 à 90 % en poids, sur la base du poids total de la composition de polypropylène, d'un homopolymère isotactique (A) de propylène à haut poids moléculaire,
   plus de 2,5 à moins de 30 % en poids, de préférence 5 à 25 % en poids, sur la base du poids total de la composition de polypropylène, d'une composition de polymère d'oléfine cyclique (B), et
   0,1 à 2,5 % en poids, de préférence 0,25 à 2 % en poids, sur la base du poids total de la composition de polypropylène, d'un agent de compatibilité de copolymères statistiques de propylène (C).

2. Composition de polypropylène selon la revendication 1, dans laquelle le rapport pondéral (C)/(B) de l'agent de compatibilité de copolymères statistiques de propylène (C) sur la composition de polymère d'oléfine cyclique (B) est dans une plage de 0,01 à 0,2, de manière préférée de 0,01 à 0,1, de manière plus préférée de 0,02 à 0,075, de manière encore plus préférée de 0,02 à 0,05.

3. Composition de polypropylène selon l'une des revendications précédentes, dans laquelle l'agent de compatibilité de copolymères statistiques de propylène (C) a un indice de fluidité à chaud $MFR_2$ (2,16 kg/230 °C), mesuré conformément à la norme ISO 1133, de 1,0 à 100 g/10 min, de manière préférée de 1,5 à 75 g/10 min, de manière plus préférée de 2,0 à 50 g/10 min.

4. Composition de polypropylène selon l'une des revendications précédentes, dans laquelle l'agent de compatibilité de copolymères statistiques de propylène (C) a au moins un élément parmi :

   • un point de fusion, mesuré conformément à la norme ISO 11357-3, de 150 °C ou moins, de manière préférée de moins de 150,0 °C, de manière plus préférée de plus de 130,0 °C à moins de 150,0 °C, de manière la plus préférée de plus de 140,0 °C à moins de 149,0 °C et
   • une teneur en éthylène, mesurée par RMN, de 0,5 à 8,0 % en poids, de manière préférée de 1,0 % en poids à 4,0 % en poids, de manière plus préférée de 2,0 à 3,8 % en poids.

5. Composition de polypropylène selon l'une des revendications précédentes, dans laquelle l'agent de compatibilité de copolymères statistiques de propylène (C) est obtenu en polymérisant du propylène et un comonomère qui est l'éthylène et/ou une alpha-oléfine en $C_4$ à $C_{12}$ en présence de

   un catalyseur de Ziegler-Natta, de manière préférée un catalyseur de Ziegler-Natta comportant un composé de titane, un composé de magnésium et un donneur interne, dans laquelle ledit donneur interne est de manière plus préférée un ester d'acide non phtalique,
   facultativement un co-catalyseur, et
   en outre, facultativement, un donneur externe.

6. Composition de polypropylène selon l'une des revendications précédentes, dans laquelle la composition de polymère d'oléfine cyclique (B) a au moins un élément parmi :

   • une température de transition vitreuse, mesurée conformément à la norme ISO 11357-3, dans la plage de 130 à 160 °C, de manière préférée dans la plage de 140 à 155 °C, et
   • un indice $MFR_2$ (2,16 kg/260 °C), mesuré conformément à la norme ISO 1133, de 2 à 50 g/10 min, de préférence de 8 à 25 g/10 min.

7. Composition de polypropylène selon l'une des revendications précédentes, dans laquelle la composition de polymère d'oléfine cyclique (B) est une composition de copolymère d'oléfine cyclique,

   de préférence, une composition de copolymère d'oléfine cyclique comportant :

   • des motifs d'oléfine cyclique, par exemple des motifs de norbornène, en une teneur de 70 à 90 % en poids, de manière préférée de 75 à 85 % en poids, de manière plus préférée de 75 à 80 % en poids, et
   • des motifs d'oléfine non cyclique, par exemple des motifs d'éthylène, en une teneur de 10 à 30 % en poids, de manière préférée de 15 à 25 % en poids, de manière plus préférée de 20 à 25 % en poids,

dans laquelle les teneurs sont chacune basées sur le poids total de la composition de polymère d'oléfine cyclique (B).

**8.** Composition de polypropylène selon l'une des revendications précédentes, dans laquelle la composition de polymère d'oléfine cyclique (B) comporte au moins un copolymère d'oléfine cyclique choisi parmi le groupe des copolymères de norbornène-éthylène et des copolymères de tétracyclododécène-éthylène ou un mélange d'au moins deux desdits copolymères d'oléfine cyclique.

**9.** Composition de polypropylène selon l'une des revendications précédentes, dans laquelle la composition de polymère d'oléfine cyclique (B) comporte au moins un premier polymère d'oléfine cyclique (b1) et un second polymère d'oléfine cyclique (b2),
dans laquelle le premier polymère d'oléfine cyclique (b1) a de préférence une température de transition vitreuse, mesurée conformément à la norme ISO 11357, inférieure à 140 °C, en particulier de 60 à moins de 140 °C, et le second polymère d'oléfine cyclique (b2) a de préférence une température de transition vitreuse, mesurée conformément à la norme ISO 11357, d'au moins 155 °C, en particulier d'au moins 155 à 190 °C.

**10.** Composition de polypropylène selon l'une des revendications précédentes, dans laquelle l'homopolymère isotactique (A) du propylène à haut poids moléculaire a au moins un élément parmi :

- une teneur en fraction pentade isotactique, mesurée par $^{13}C$-RMN, de 93 à 99,5 %, de manière préférée de 95 à 99,0 %, de manière plus préférée de 96 à 98,5 %,
- un indice $MFR_2$ (2,16 kg/230 °C), mesuré conformément à la norme ISO 1133, de 0,4 à 10 g/10 min, de préférence de 0,5 à 5 g/10 min.
- une teneur en cendres, mesurée conformément à la norme ISO 3451-1 (1997), de 60 ppm ou moins, de préférence de 30 ppm ou moins, et
- une température de cristallisation (Tc), mesurée conformément à la norme ISO 11357, de 110 à 130 °C, de préférence de 110 à 120 °C.

**11.** Film comportant la composition de polypropylène selon l'une des revendications précédentes.

**12.** Film selon la revendication 11, ayant une conductivité électrique inférieure à $6{,}0 \cdot 10^{-15}$ S/cm, de manière préférée inférieure à $3{,}0 \cdot 10^{-16}$ S/cm, de manière plus préférée dans une plage de plus de $3{,}0 \cdot 10^{-17}$ S/cm à moins de $3{,}0 \cdot 10^{-16}$ S/cm, dans lequel la conductivité électrique est mesurée au moyen d'un spectromètre diélectrique avec un courant alternatif à une fréquence de $10^{-2}$ Hz à une température de 130 °C et sur le film ayant une épaisseur de 100 $\mu$m.

**13.** Film selon l'une des revendications 11 et 12, dans lequel le diamètre moyen des domaines de la composition de polymère d'oléfine cyclique (B) déterminés visuellement dans des images AFM de découpes de 10 x 10 $\mu m^2$ du film avec une épaisseur de 300 $\mu$m est inférieur à 2,0 $\mu$m, de manière préférée dans une plage de 0,1 à moins de 2,0 $\mu$m, de manière plus préférée dans une plage de 0,2 à 1,0 $\mu$m.

**14.** Film à orientation biaxiale comportant la composition de polypropylène selon l'une des revendications 1 à 10.

**15.** Condensateur comportant le film à orientation biaxiale selon la revendication 14.

Figure 1

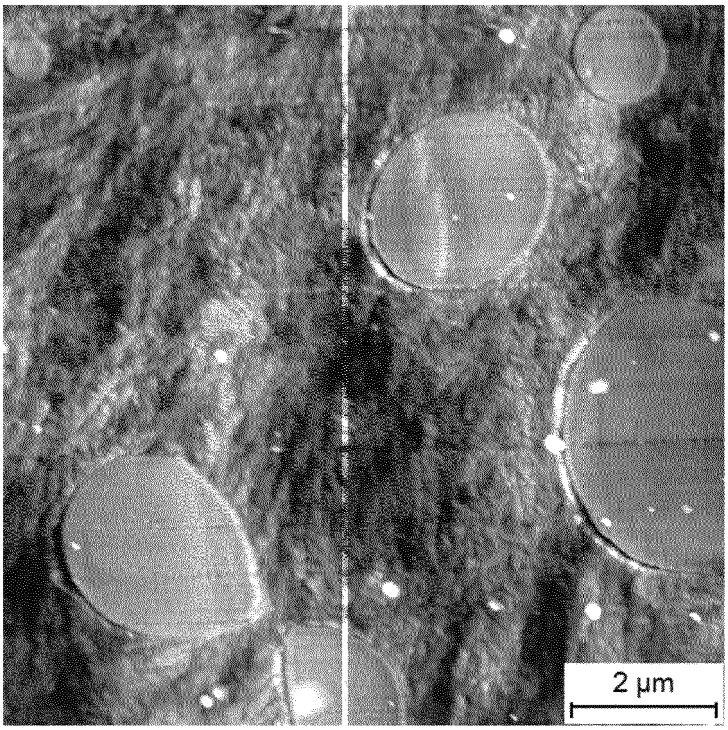


Figure 2

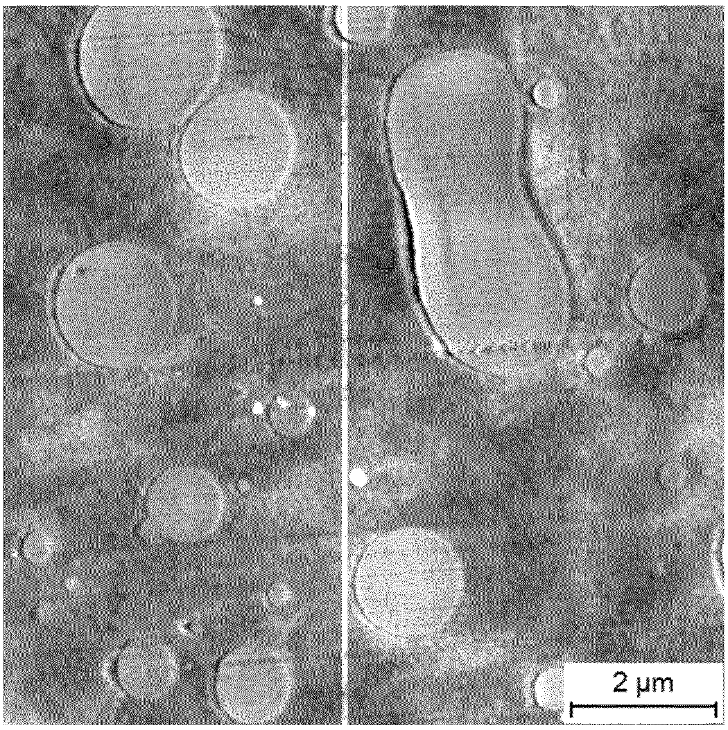

Figure 3

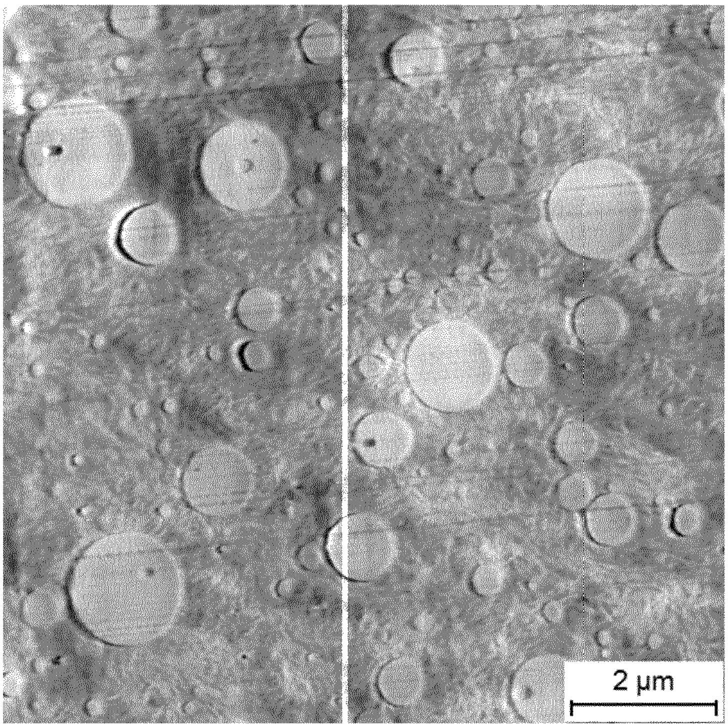


Figure 4

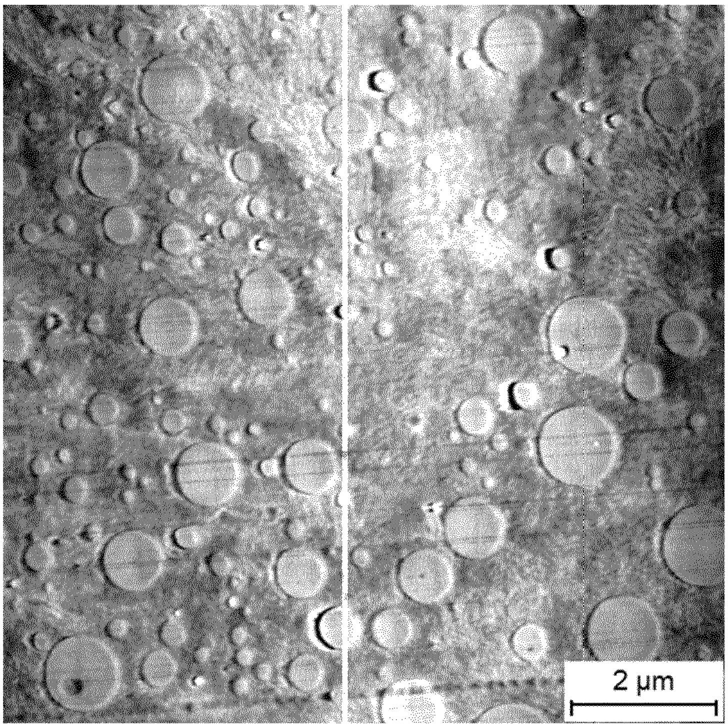

Figure 5

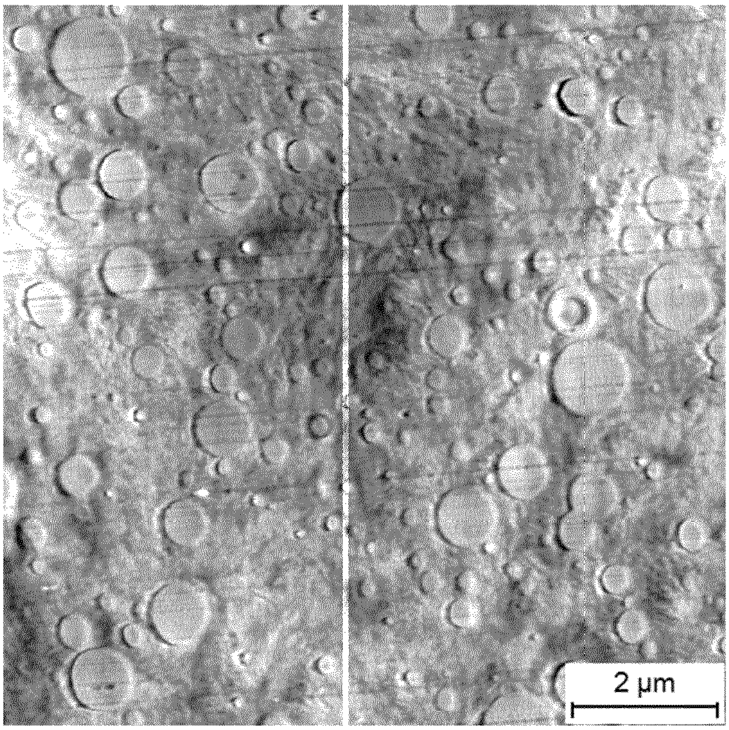


Figure 6

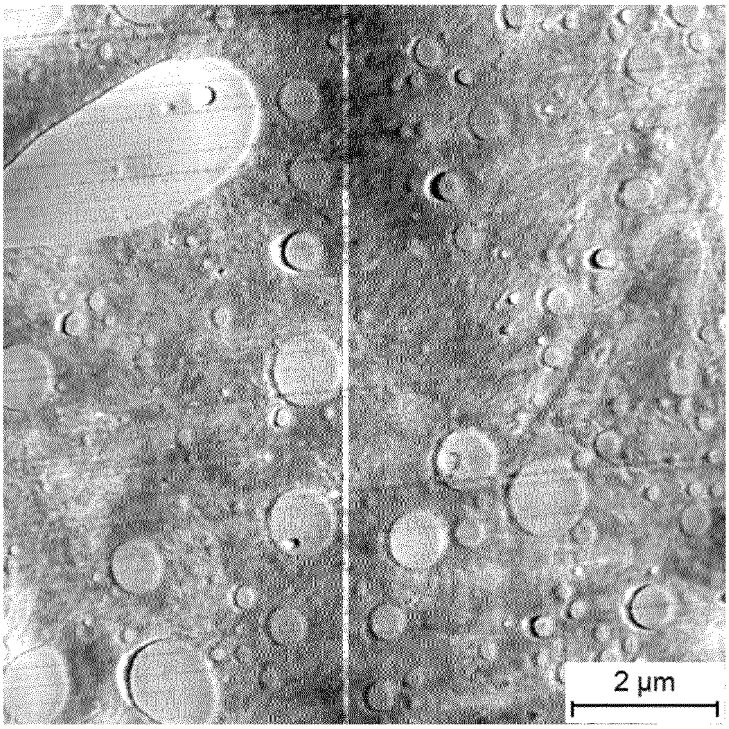

**Figure 7**

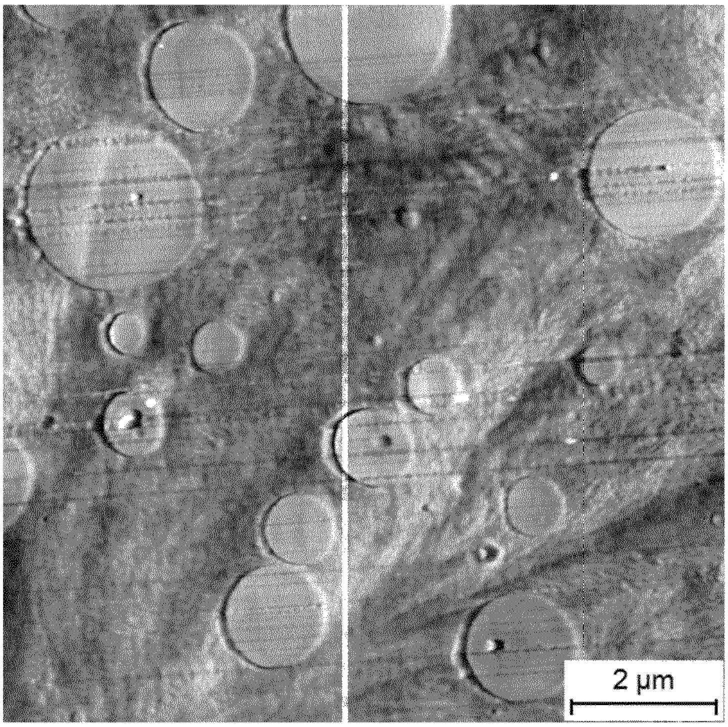

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 101724195 A
- EP 2995641 A1
- WO 2018210854 A1
- WO 2018197034 A1
- EP 4174120 A1
- WO 2014187686 A1
- WO 2014187687 A1
- EP 0887379 A1
- WO 9212182 A1
- WO 2004000899 A1
- WO 2004111095 A1
- WO 9924478 A1
- WO 9924479 A1
- WO 0068315 A1
- WO 2012007430 A1


### Non-patent literature cited in the description


- *Macromol. Chem. Phys.*, 1998, vol. 199, 1221-1232
- **SINGH, G.** ; **KOTHARI, A** ; **GUPTA, V.** *Polymer Testing*, 2009, vol. 28 (5), 475
- **ZHOU, Z** ; **KUEMMERLE, R.** ; **QIU, X** ; **REDWINE, D** ; **CONG, R.** ; **TAHA, A** ; **BAUGH, D** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R** ; **SEVERN, J.** ; **TALARICO, G.** *Macromol. Rapid Commun.*, 2007, vol. 28, 1128
- **CHENG, H. N.** *Macromolecules*, 1984, vol. 17, 1950
- **WANG, WJ** ; **ZHU, S**. *Macromolecules*, 2000, vol. 33, 1157
- **BUSICO, V** ; **CIPULLO, R.** *Prog. Polym. Sci.*, 2001, vol. 26, 443
- **BUSICO, V** ; **CIPULLO, R.** ; **MONACO, G.** ; **VACATELLO, M.** ; **SEGRE, A.L.** *Macromoleucles*, 1997, vol. 30, 6251
- **ZHOU, Z.** ; **KUEMMERLE, R.** ; **QIU, X.** ; **REDWINE, D** ; **CONG, R** ; **TAHA, A.** ; **BAUGH, D.** ; **WINNIFORD, B**. *J. Mag. Reson.*, 2007, vol. 187, 225
- **BUSICO, V** ; **CARBONNIERE, P** ; **CIPULLO, R** ; **PELLECCHIA, R** ; **SEVERN, J.** ; **TALARICO, G.** *Macromol. Rapid Commun.*, 2007, vol. 28, 11289
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N**. *Macromolecules*, 1984, vol. 17, 1950
- **BUSICO, V.** ; **CIPULLO, R.** *Prog. Polym. Sci.*, 2001, vol. 26, 443
- **BUSICO, V** ; **CIPULLO, R.** ; **MONACO, G.** ; **VACATELLO, M.** ; **SEGRE, A.L**. *Macromoleucles*, 1997, vol. 30, 6251
- *CHEMICAL ABSTRACTS*, 6683-19-8
- *CHEMICAL ABSTRACTS*, 31570-04-4
- *CHEMICAL ABSTRACTS*, 1309-48-4
- *CHEMICAL ABSTRACTS*, 1592-23-0
- *CHEMICAL ABSTRACTS*, 31566-31-1
- *CHEMICAL ABSTRACTS*, 135861-56-2